# EUROPEAN PATENT APPLICATION

(11) **EP 1 067 496 A2**
(43) Date of publication of application: **10.01.2001**
(21) Application number: 00305812.0
(22) Date of filing: 10.07.2000
(51) Int. Cl.: G08B 13/14

(54) **Security device and method for detecting the unauthorized opening of containers**

(30) Priority: 09.07.1999 US 349775
(71) Applicant: Watchman Technical Products Inc., Regina, Saskatchewan S4S OJ8 (CA)
(72) Inventor: Still, Paul, Regina, Saskatchewan S4S OJ8 (CA)
(74) Representative: Johnson, Terence Leslie

(57) **Abstract**

The present invention relates to a security device (10) and a system and method based on light detection for detecting the unauthorized opening of containers (computer cases, luggage, filing cabinets, shipping containers, etc.). The security device (10) is mounted inside the container for signalling whether the aperture is opened and includes the following: a power source (12) such as a battery that is independent of any power supply in the container; a light sensor (14) (such as a photo transistor) to detect light entering the container; a controller (18) powered by the power source (12) and connected to the light sensor (14); a warning system (16) (such as an audible alarm system) activated by the controller (18), the controller activating the warning system when the light sensor (14) detects light that exceeds a first predetermined threshold indicating that the container has been breached; and a locking mechanism (128) (key lock, combination lock, infra-red based lock) for enabling and disabling the security device.

## Description

### Field of the Invention

This invention relates to the field of security and anti-theft systems, and more particularly, to a security device and method for detecting the unauthorized opening of containers such as desktop computer cases, attache (brief) cases, filing and storage cabinets, and the like.

### Background of the Invention

Computer equipment manufacturers and software developers have concentrated on developing password systems and other security devices to prevent unauthorized access to information on a computer. However, very little has been done to physically protect the computers and associated components/peripherals themselves. This is becoming an increasing complex problem given that computers are becoming more modularized, with important component parts (e.g. Central Processing Units-CPUs, memory chips, disk drives, expansion cards-graphics and sound boards, etc.) being easily and quickly removed from computer cases.

Standard physical protection using passive cable restraint systems have met with limited success since a large number of thefts relating to computers involve the removal of internal components and not the computer case *per se*.

Similarly, the shipping and travel industry is faced with an increasingly growing security problem in that containers, packages, luggage and the like (hereinafter referred to simply as "containers") are vulnerable to being opened by unauthorized personnel.

Various solutions relating to "trip-wire" implementations and motion sensor based systems have been proposed in the prior art. For example, a "trip-wire" solution to unauthorized container opening is taught in U.S. Patent No. 5,831,531 issued on November 3, 1998; and a motion sensor solution to provide an anti-theft alarm is taught in U.S. Patent No. 5,838,225 issued on November 17, 1998.

### Summary of the Invention

An object of the present invention is to provide a security device and method that improves the detection of unauthorized opening of containers.

Another object of the present invention is to provide a security device and method to detect the unauthorized opening of a desktop computer case.

In accordance with one aspect of the present invention there is provided for an apparatus having an aperture capable of being closed and opened by moving first and second closure members together and apart, respectively, a security device mounted inside the apparatus for signalling whether the aperture is opened, comprising: (a) a power source; (b) a light sensor to detect light entering the apparatus through the aperture; (c) a controller powered by the power source and connected to the light sensor; (d) a warning means activated by the controller; the controller activating the warning means when the light sensor detects light that exceeds a first predetermined threshold; and (e) lock means for enabling and disabling the security device.

In accordance with another aspect of the present invention there is provided for an apparatus having an aperture capable of being closed and opened by moving first and second closure members together and apart, respectively, a security device mounted inside the apparatus for signalling whether the aperture is opened, comprising: (a) a power source: (b) a light detector connected to the power source and mounted in the apparatus proximate to the aperture for detecting light in the apparatus; and (c) alarm means for generating a first alarm message when the light detector detects light that exceeds a first predetermined threshold.

In accordance with another aspect of the present invention there is provided a method for signalling whether an aperture of a container having first and second closure members capable of being closed and opened by moving the first and second closure members together and apart, respectively, is opened; said method comprising the steps of: (a) detecting the light in the container; and (b) generating a first alarm message in response to detecting light in the container that exceeds a first predetermined threshold.

### Brief Description of the Drawings

The present invention will be described in conjunction with the drawings in which:
Fig. 1 is a schematic circuit representation of a security device according to an embodiment of the present invention;
Fig. 2 is a flow chart illustrating an arming process for the security device of Fig. 1;
Figs. 3 and 4 are flow charts illustrating the monitoring process for the security device of Fig. 1;
Fig. 5A is a perspective view of an desktop computer implementation of the security device of Fig. 1 using a mechanical arming and disarming mechanism;
Fig. 5B is a perspective view of another desktop computer implementation of the security device of Fig. 1 using an infra-red arming and disarming mechanism;
Fig. 5C is a perspective view of a desktop computer case with the security device of Fig. 5A mounted therein;
Fig. 6 is a perspective view of an attache/brief case with a security device according to another embodiment of the present invention mounted therein; and
Fig. 7 is a perspective view of a filing/storage cabinet with a security device according to another embodiment of the present invention mounted therein.

### Detailed Description of Embodiments of the Invention

The present invention applies primary to containers that are unlit or relatively dark inside the container when properly closed. Containers in the context of the present application include desktop computer cases, luggage (for example attache/brief cases, tote, sport or camera bags), filing/storage cabinets, safes, drawers (for example commercial cash registers), shipping containers (for example crates, chests), tool boxes, tool sheds, tool trailers, trunk or hood of vehicles, fuse box or alarm box for security systems, locked gun containers, supply cabinets (for example in the application of medicine, drug or chemical storage), and the like.

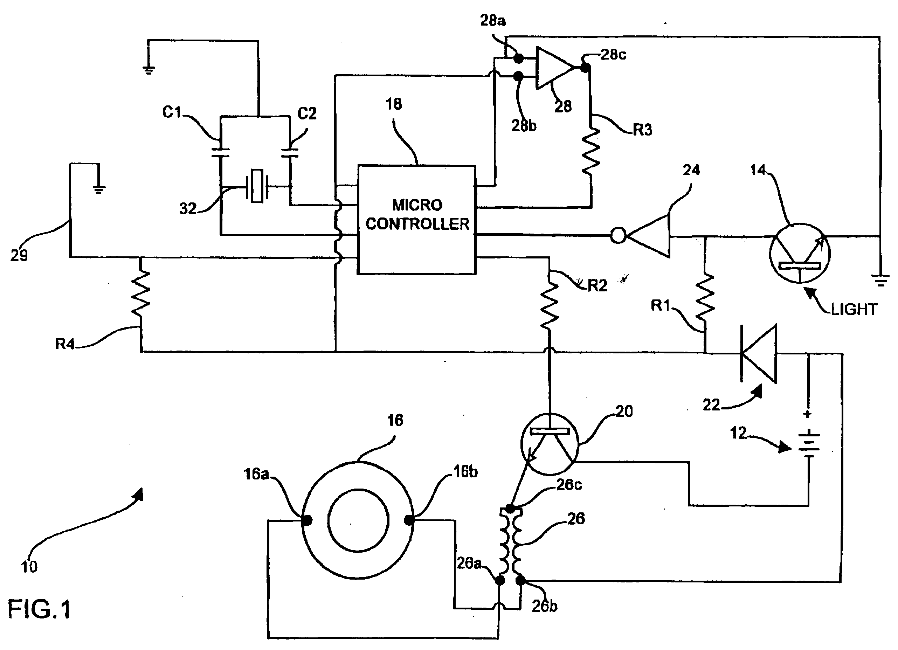

An electronic schematic representation of a security device 10 according to an embodiment of the present invention is illustrated in Fig. 1. The security device 10 includes the following principal components: a power source 12, a light detection transistor 14, a piezo alarm element 16, and a micro-controller 18, which controls the operation of the circuit items 12, 14, and 16 and other circuit elements discussed below.

The power source 12 is a multi-cell source such as a battery (e.g. rechargeable or regular alkaline) preferably independent of any power supply of the container being secured (various implementations of the security device 10 are discussed hereinbelow). The power source 12 is connected (negative terminal) to the collector of an NPN transistor 20 and (positive terminal) to a diode 22.

The light detection transistor 14 is a NPN silicon photo transistor that is capable of detecting light in at least the visible and infra-red spectrums. A pull-up resistor R1 determines the triggering level of the transistor 14 and an inverter 24 (i.e. a Schmitt trigger) is used to condition the signal being passed from the transistor 14 to the micro-controller 18.

The piezo alarm element 16 includes two terminals 16a and 16b. The piezo alarm element 16 is connected to a trigger coil 26 having three terminals 26a, 26b and 26c. Terminal 16a of the piezo alarm element 16 is connected to terminal 26a of the trigger coil 26. Terminal 16b of the piezo alarm element 16 is connected to terminal 26b of the trigger coil 26 and the positive terminal of the power source 12. The terminal 26c of the trigger coil 26 is attached to the emitter of the transistor 20. The base of the transistor 20 is connected to a resistor R2, which is connected to the micro-controller 18.

An alarm sound is generated by the piezo alarm element 16 when the micro-controller 18 outputs a series of pulses to the transistor 20 via resistor R2, which induces a high voltage in the trigger coil 26 on terminal 26c that is applied to the piezo alarm element 16 on terminal 16a causing it to vibrate and emit a loud buzz.

The device 10 further includes a voltage comparator 28, having input terminals 28a and 28b and an output terminal 28c, that is preset to trigger at a voltage chosen to be compatible to the voltage generated by the power source 12. The input terminal 28a is connected to the micro-controller 18 and to common ground. The input terminal 28b is connected to the micro-controller 18 and the power source 12 through the diode 22. The output terminal 28c of the comparator 28 is connected to the micro-controller 18 through a resistor R3.

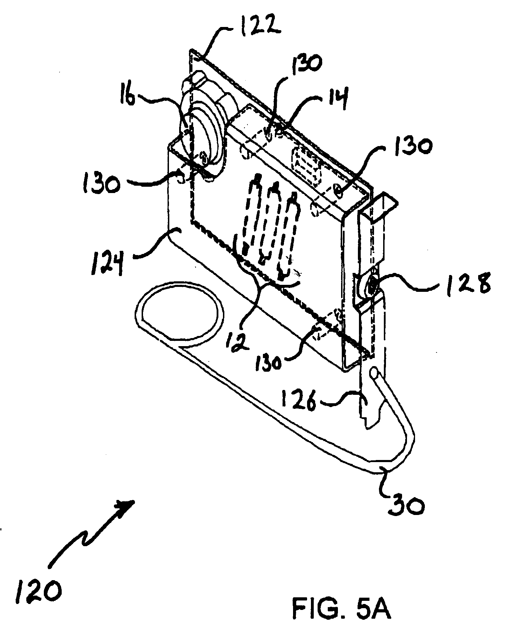

An external leash lead 29, which is ultimately preferably connected to an external leash 30 (shown in Fig. 5A), is a continuous loop of wire inside a strong protecting sheath. The voltage level through the leash 30 is held at a constant value using a resistor R4, which is connected to the micro-controller 18. If the leash 30 is cut to remove the device 10 or the container housing the device the continuous loop of wire is broken, thereby changing a signal to the micro-controller 18 to trigger an alarm (discussed further below).

The device 10 also includes a crystal 32 connected between two capacitors C1 and C2 to control the operating frequency of the micro-controller 18 (i.e. the oscillating clock), which provides a very stable vibrating frequency under various voltage and temperature conditions of the device 10.

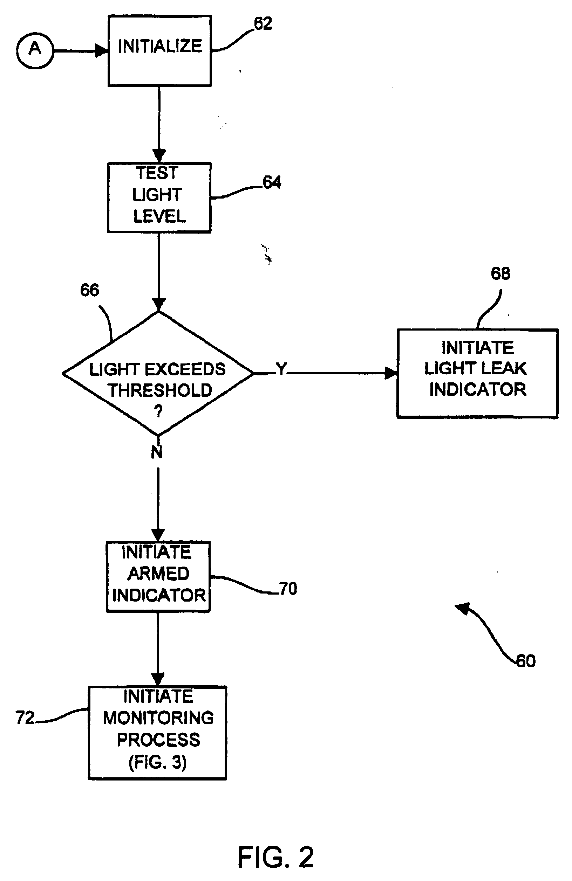

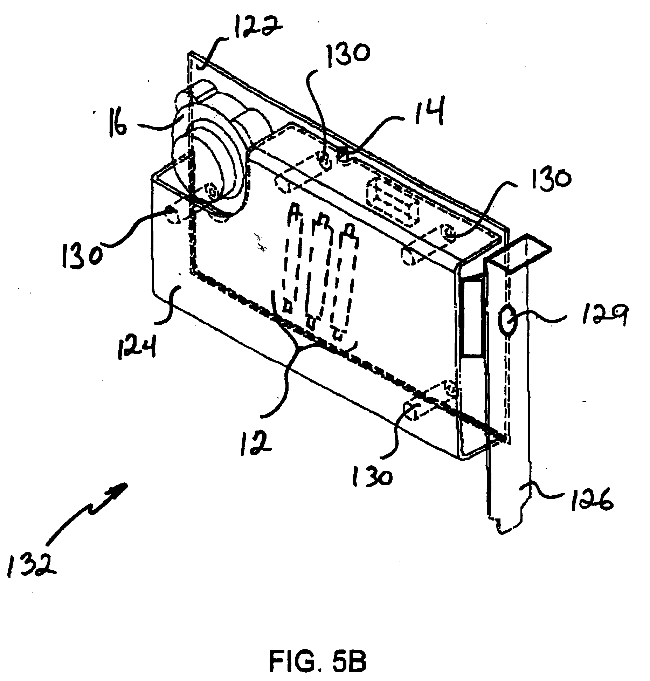

Fig. 2 illustrates a security device arming method 60 according to an embodiment of the present invention. The method begins at an initialization step 62 used to intialize counters and interrupts in the micro-controller 18. The light level in the container (refer to Figs. 5B-7) is tested at step 64 using the photo transistor 14 as discussed above. If the amount of light detected at step 64 exceeds a predetermined threshold, as determined at step 66, a light leak indicator is initiated at step 68. The light leak indicator can include a moderate sound level, regular interval buzz from the piezo element 16.

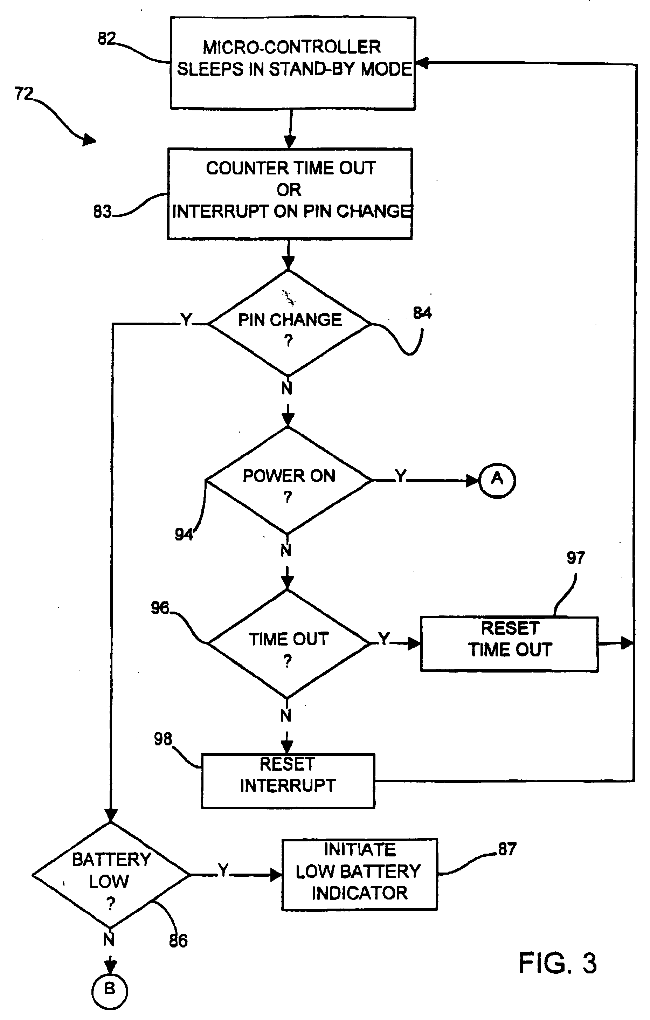

If the amount of light detected at step 64 is equal to or lower than a predetermined threshold, as determined at step 66, an armed indicator is initiated at step 70. The armed indicator can include a moderate sound level single buzz from the piezo element 16. After the security device 10 is armed in step 70 a monitoring process is initiated at step 72, which Is detailed in Fig. 3.

The predetermined threshold used in step 66 is dependent on the specific application and can be readily adapted to various operating environments and containers. Detailed examples of various thresholds are provided hereinbelow.

The monitoring process 72 begins after the device 10 has been successfully armed in step 70 with the micro-controller 82 in sleep or stand-by mode at step 82. In particular, the micro-controller 18 is normally receiving signals based on activity from the various components of the device 10, as discussed above, that are continuously monitored for change. In this regard, the micro-controller 18 can be either awakened on a counter time out or be interrupted by a pin change at step 83.

If a pin change (i.e. a change in the operating condition of the device 10) is detected at step 84 processing proceeds to a battery low evaluation step 86. If the power source 12 (e.g. battery) is determined to be low (i.e. insufficient to sustain a lengthily alarm) a low battery indicator is initiated at step 88. The low battery indicator can include a brief tone emitted from the piezo element 16 at regular intervals.

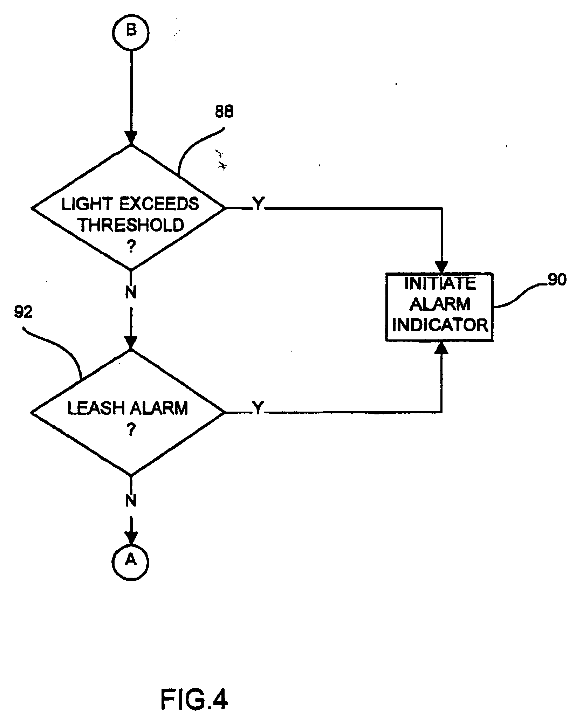

If the battery 12 has sufficient power (i.e. the low battery test is negative), as determined at step 86, processing continues to a light threshold evaluation step 88 (Fig. 4). If the photo transistor 14 detects light that exceeds a predetermined threshold an alarm indicator is initiated at step 90. This represents the situation when the container has been breached (i.e. leveraged open, cut, etc.). If the photo transistor 14 detects light within the predetermined threshold processing continues to a leash alarm detection step 92. If the leash 30 has been cut a signal is sent to the micro-controller 18, as previously discussed, and the alarm indicator 90 is initiated. The alarm indicator is an extremely loud continuous buzz emitted from the piezo element 16.

The predetermined threshold used in step 88 is dependent on the specific application and can be readily adapted to various operating environments and containers. The predetermined thresholds of step 66 and 88 need not be identical and are preferably different as shown in the detailed examples of various thresholds provided hereinbelow.

Returning to Fig. 3, if the pin change determination at step 84 is negative processing continues to step 94 to determine if the security device 10 is in a start-up powered on condition. If the security device 10 is in a start-up powered on condition processing returns to the arming process 60 beginning at the initialization step 62. If the decision is negative, as determined at step 94, processing continues to a time out determination step 96.

If the security device 10 is timed out (i.e. interrupt was generated by counter time out) the time out is reset at step 97 and processing returns to the stand-by mode step 82 to maintain monitoring. If the security device 10 is not timed out processing continues to step 98 to reset interrupts of the micro-controller 18 and return to the stand-by mode at step 82 to maintain monitoring.

Fig. 5A provides a perspective view of the security device 10 in a desktop computer case implementation 120. The desktop computer case implementation 120 includes a mounting board 122 for mounting the circuitry of the security device 10, a tamper proof cover 124, a mounting clip 126 adapted to fit into a regular anchor position of an expansion slot of a computer, a locking mechanism 128, and the electronic leash 30. The tamper proof cover 124 is designed to be removed for battery 12 replacement and is secured to the mounting board 122 using four slotted, self-tapping screws 130.

The electronic leash 30 is a continuous loop of wire that is interrupted by cutting or removing the leash 30 from the clip 126. The leash 30 acts as a physical restraint preventing the unauthorized relocating of the computer. The leash 30 cannot be removed without opening the computer or cutting the leash 30-both of which will trigger the device 10. (refer to Fig. 4)

Fig. 5B provides a perspective view of another desktop computer implementation 132 of the security device 10 where the device 10 is armed and disarmed using infra-red signaling received through an infra-red receiver 129.

The infra-red enable (arm) and disable (disarm) functions are achieved by each device 10 of the desktop computer implementation 132 having a unique binary combination value stored in a permanent memory of the micro-controller 18. An external device (not shown), which can be supplied with the device 10, has the same value programmed into its permanent memory.

When power is first applied to the device 10, the device 10 is in a stand-by mode until there is a combination of pulses received at the infra-red receiver 129 that corresponds with its binary combination as stored in the micro-controller 18. The implementation 132 will then accept commands to enable the device 10 to be armed and disarmed as required using standard infra-red signaling techniques known in the art.

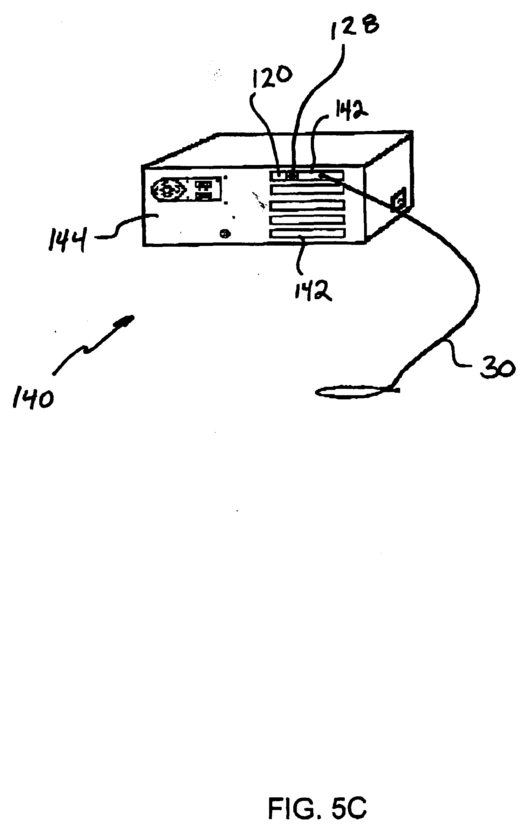

In particular, the infra-red receiver 129 acts as an infra-red light actuated switch that enables the security device in response to a first infra-red signal and disables the security device in response to a second infra-red signal. Fig. 5C provides a perspective view of the desktop computer implementation 120 of the security device 10 mounted in a computer 140.

The desktop computer implementation 120 of the security device 10 is an internal security arrangement designed for installation in an expansion slot 142 in a personal computer case 144. To address the theft of computer parts in the case the security device 10 activates an aggressive wailing siren triggered by unauthorized persons opening the computer case 144.

To provide another level of physical security to deter the unauthorized removal of the entire computer 140 the security device 10 includes the electronic leash 30. The leash 30 affixes the computer 140 to a more permanent fixture such as a desk, table or floor. Cutting the leash 30 activates the alarm as discussed above.

For authorized access to the computer 140 the desktop computer implementation 120 of the security device 10 includes the locking mechanism 128 (e.g. a key lock, combination lock, infra-red based signaling to enable/disable the device 10, as discussed above in conjunction with Fig. 5B, and the like).

The operating principle of the desktop computer implementation 120 is based on the computer case 144 opening function being universal in that most computers 140 are unlit or dark inside the case 144 when property closed. The desktop computer implementation 120 of the security device 10 is installed in the expansion slot 142. The case 144 is replaced before the security device 10 is activated (armed) using the locking mechanism 128.

The device 10 (using the photo transistor 14) tests the light source levels to ensure an adequate level of darkness is detected and generates two short chirps (for example) on the piezo element 16 indicating that the device is armed and is ready for monitoring. If the level of light detected is excessive, the piezo element 16 emits a soft chirping sound approximately once per second (for example).

After resolving the cause of the "light leak", the device 10 must be re-initialized (as discussed above in conjunction with Figs. 3 and 4) by turning the locking mechanism 128 to an "on" position. After a successful startup, the device 10 continuously detects the light levels inside the computer 140 and is ready to sound an alarm through the piezo element 16 on detection of a significant change of light. Once triggered, the alarm will not stop until disarmed, by turning the locking mechanism 128 to an "off" position, to disable it or the power from the battery 12 expires.

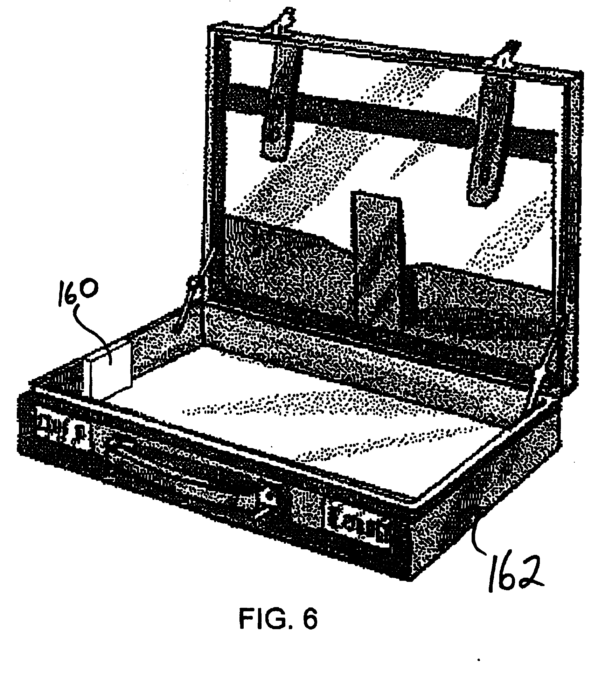

Fig. 6 provides a perspective view of an attache/brief case implementation 160 of the security device 10 mounted in an attach/brief case 162. The components and operation of the implementation 160 are identical to that described above in conjunction with Figs. 1 to 4.

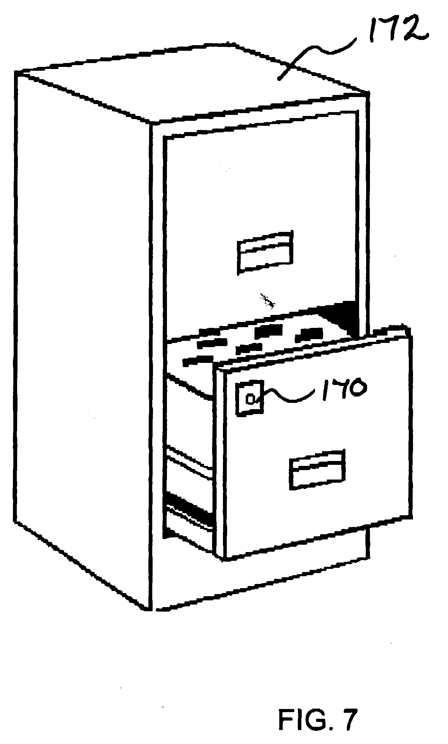

Fig. 7 provides a perspective view of a filing cabinet implementation 170 of the security device 10 mounted in a filing cabinet 172. The components and operation of the implementation 170 are identical to that described above in conjunction with Figs. 1 to 4.

Lighting and light level variation is an important characteristic in the use of the security device 10 in the various implementations (120, 132, 160, 170) discussed above in terms of determining valid arming thresholds (step 66) and alarm triggering thresholds (step 88). For example, some personal computers have ventilation slots in the case that may interfere with the operation of the ability of the photo transistor 14 to detect light. The function of detecting the opening of a container requires a balance where there must be a clear recognition of the difference between light and dark. In this regard, the following examples are provided in Table A1.

**TABLE A1**

| CONTAINER TYPE | LIGHT BEING DETECTED | THRESHOLD TO ARM (watts/cm²) at photo transistor 14 | THRESHOLD TO TRIGGER ALARM ONCE ARMED (watts/cm²) at photo transistor 14 |
|---|---|---|---|
| Computer case 144 | Visible to infrared normalized to 600 nm | ≈ 0.015x10⁻⁵ | ≈ 0.07x10⁻⁵ |
| Filing Cabinet 172 | Visible to infrared normalized to 600 nm | ≈ 0.015x10⁻⁵ | ≈ 0.07x10⁻⁵ |
| Attache/brief Case 162 | Visible to infrared normalized to 600 nm | ≈ 0.015x10⁻⁵ | ≈ 0.07x10⁻⁵ |

## Claims

1. For an apparatus having an aperture capable of being closed and opened by moving first and second closure members together and apart, respectively, a security device mounted inside the apparatus for signalling whether the aperture is opened, comprising:
(a) a power source;
(b) a light sensor to detect light entering the apparatus through the aperture;
(c) a controller powered by the power source and connected to the light sensor;
(d) a warning means activated by the controller; the controller activating the warning means when the light sensor detects light that exceeds a first predetermined threshold; and
(e) lock means for enabling and disabling the security device.

2. The security device of claim 1, wherein the warning means is further activated by a condition selected from the group consisting of (i) insufficient power from the power source based on a prescribed threshold defined by the controller and (ii) the light sensor detects light that exceeds a second predetermined threshold when the security device is enabled using the switch.

3. The security device of claim 2, wherein the lock means is a mechanical locking switch that enables the security device in a first position and disables the security device in a second position.

4. The security device of claim 3, wherein the condition (ii) is assessed when the mechanical locking switch is moved from the second position to the first position.

5. The security device of claim 4 wherein the mechanical locking switch is a key lock mechanism.

6. The security device of claim 2, wherein the lock means is an infra-red light actuated switch that enables the security device in response to a first infra-red signal and disables the security device in response to a second infra-red signal.

7. The security device of claim 6, wherein the condition (ii) is assessed when the infra-red light actuated switch receives the first infra-red signal.

8. The security device of claim 1, wherein the apparatus is a computer case and the first and second closure members are external walls of the computer case.

9. The security device of claim 8, further including a clip for mounting the security device in an expansion slot of the computer case.

10. The security device of claim 1, further including a leash connected to the controller at one end and adapted to be fixed to an object proximate to the apparatus at another end.

11. The security device of claim 10, wherein the warning means being activated by further conditions including: (iii) when the leash is severed, and (iv) when the leash is removed from the controller.

12. The security device of claim 2, wherein the warning means generates a first audible signal when the light sensor detects light that exceeds the first predetermined threshold; a second audible signal when the light sensor detects light that exceeds the second predetermined threshold and a third audible signal when insufficient power from the power source is detected.

13. The security device of claim 1, wherein the light sensor is responsive to light in the visible spectrum.

14. The security device of claim 13, wherein the light sensor is further responsive to right in the infra-red spectrum.

15. The security device of claim 14, wherein the light sensor is a silicon photo transistor.

16. The security device of claim 15, wherein the warning means is a piezo element.

17. The security device of claim 15, wherein the first predetermined threshold is approximately 0.07x10⁻⁵ watts/cm² measured at the silicon photo transistor.

18. The security device of claim 15, wherein the second predetermined threshold is approximately 0.015x10⁻⁵ watts/cm² measured at the silicon photo transistor.

19. The security device of claim 1, wherein the power source is independent of the apparatus.

20. For an apparatus having an aperture capable of being closed and opened by moving first and second closure members together and apart, respectively, a security device mounted inside the apparatus for signalling whether the aperture is opened, comprising:
(a) a power source;
(b) a light detector connected to the power source and mounted in the apparatus proximate to the aperture for detecting light in the apparatus; and
(c) alarm means for generating a first alarm message when the light detector detects light that exceeds a first predetermined threshold.

21. The security device of claim 20, further comprising:
(d) a lock mechanism for enabling and disabling security device.

22. The security device of claim 21, wherein the lock mechanism is a mechanical locking switch that enables the security device in a first position and disables the security device in a second position.

23. The security device of claim 22, wherein the alarm means generates a second alarm message when the light detector detects light that exceeds a second predetermined threshold when the mechanical locking switch is moved from the second position to the first position.

24. The security device of claim 21, wherein the lock mechanism is an infra-red light actuated switch that enables the security device in response to a first infra-red signal and disables the security device in response to a second infra-red signal.

25. The security device of claim 24, wherein the alarm means generates a second alarm message when the light detector detects light that exceeds a second predetermined threshold when the infra-red light actuated switch receives the first infra-red signal.

26. A method for signalling whether an aperture of a container having first and second closure members capable of being closed and opened by moving the first and second closure members together and apart, respectively, is opened; said method comprising the steps of:
(a) detecting the light in the container; and
(b) generating a first alarm message in response to detecting light in the container that exceeds a first predetermined threshold.

27. The method of claim 26, further comprising, prior to step (a), detecting the light in the container during an arming phase to ensure that the level of light in the apparatus when closed is below a second predetermined threshold.

28. The method of claim 27, further comprising, generating a second alarm message in response to detecting light in the container during the arming phase that exceeds the second predetermined threshold.

29. The method of claim 28, wherein the first alarm message is a first audible signal and the second alarm message is a second audible signal.

30. The method of claim 26, wherein the step of detecting light detects visible and infra-red wavelengths of light.
